# EUROPEAN PATENT SPECIFICATION

(11) **EP 1 027 405 B1**
(45) Date of publication and mention of the grant of the patent: **11.08.2004**
(21) Application number: 98947243.6
(22) Date of filing: 08.10.1998
(51) Int. Cl.: C09K 21/04, B32B 17/06

(54) **HEAT-SWELLABLE MATERIAL**
IN DER HITZE EXPANDIERBARES MATERIAL
MATIERE SUSCEPTIBLE DE GONFLER A LA CHALEUR

(30) Priority: 15.10.1997 GB 9721813
(43) Date of publication of application: 16.08.2000
(73) Proprietor: GLAVERBEL, 1170 Bruxelles (BE)
(72) Inventor: GOELFF, Pierre, B-6120 Nalinnes (BE); MOUSSIAUX, Pierre, B-5004 Bouge (BE); MICHEL, Bruno, B-3090 Overijse (BE); DALLENOGARE, Xavier, B-1380 Sauvagemont (Lasne) (BE); ALAOUI, Naima, B-1050 Bruxelles (BE)
(74) Representative: Baruh, Colette
(86) International application number: PCT/BE1998/000148
(87) International publication number: WO 1999/019422

(56) References cited:
- EP-A- 0 703 067
- US-A- 3 997 700
- US-A- 4 913 847
- US-A- 5 069 889
- US-A- 5 543 230

## Description

This invention relates to a heat-swellable transparent material. It is particularly concerned with heat-swellable materials to be used in glazing panels.

The general requirements for a fire-resistant panel are to provide an effective barrier against flames and fumes and to provide thermal insulation. When all other parameters are constant, the extent of the fire resistance may depend on the type and size of glazing, the type of materials used in its construction and the manner in which it is held in a surrounding frame in an aperture. While glass is non-combustible it may itself soften or break under intense heat from a fire, or its frame may burn or distort, such that the barrier fails and direct fire propagation or escape of fumes can occur.

The use of a transparent heat-swellable material between layers of glazing material to improve the fire-resistant properties of glazing panels is well established to enhance the resistance of the panel, both to heating in general and to exposure to fire in particular. The panel is formed as a laminate with a layer or layers of the transparent heat-swellable material each sandwiched between two transparent structural plies, usually thin glass sheets.

GB patent 1590837 teaches the use of an intumescent material sandwiched between two structural plies in a laminated fire screening panel. It describes the use of hydrated metal salts as the intumescent material, especially hydrated alkali metal silicates such as hydrated sodium silicate. Other examples of the intumescent material are hydrated potassium aluminate, sodium plumbate, potassium plumbate, sodium stannate, potassium stannate, sodium stannate, aluminium sodium sulphate, aluminium potassium sulphate, sodium borate, sodium orthophosphate and potassium orthophosphate.

US patent 4,913,847 discloses the use of a fire retardant product to use between two glass panes,made essentially of monoaluminum-hydrophosphate and boric acid. This product as indicated in the specification is not fully satisfying on aging tests.

EP-0468259-A1 describes fireproofing materials which can be used as intermediate layers in laminated glass constructions. The materials are based on ammonium or amine salts of an acid phosphate of a metal such as magnesium, calcium, zinc or aluminium. The amine may be ethanolamine, ethylene diamine; a polyethylene polyamine with 3 to 7 nitrogen atoms or mixtures of such amines with ammonia.

Other prior publication relating to intumescent material are EP703 067 and US 3,997,700. The first one is concerned only with pourable material which remains fluid which allows for restricted uses, the second one is reciting a large variety of materials without mentioning those according to the invention.

During the course of a fire, the heat-swellable material slowly swells as the temperature increases, the water of hydration is driven off by the heat of the fire, and the material is converted to a foam which serves as a barrier to both radiated and conducted heat and may also preserve the ability to bond together structural sheets of the panel such as sheets of glass which may become shattered by the fire. Panels are typically graded according to the length of time of heating under defined conditions until failure occurs in respect of such properties as insulation and integrity. In the initial period of a fire, up to 30 minutes, the panel should provide a high level of thermal insulation in order to facilitate the escape or if necessary the rescue of people in the affected area. This period is normally sufficient to permit the safe exit of everyone other than the fire-fighters who remain to control and extinguish the fire. The panel should also provide a barrier to flame and fumes and a restraint to transmission of radiated heat for at least the first 30 minutes and preferably for at least 60 minutes. With increasing emphasis on safety provisions in the home and at the workplace there is an increasing demand for panels to offer longer periods, for example of 90 minutes or more, as a barrier to flame and fumes and of low transmitted radiation. Such longer periods are seen as important in seeking to provide sufficient time for fire-fighters to remain in a building and to control and extinguish the fire with minimum loss and damage to the affected property.

The fire-resistance of glazing panels is tested by mounting them in a wall of a furnace whose interior temperature is then increased according to a pre-determined schedule. Such a test is specified in International Standard ISO 834-1975 and is also described in International Standard ISO 9051-1990 which speaks specifically of the fire-resistance requirements for glazed assemblies. The latter standard specifies that:
"Some transparent and translucent glazed assemblies can meet requirements for stability and integrity (RE), and in some cases insulation (REI, where R is for *"resistance"*, E for *"étanchéité"* and I for *"insulation")*.
"Glazed assemblies of fire-resistance according to class RE under the fire conditions as defined in ISO 834 provide, for a given time, stability and integrity. The temperature of the unexposed side is not taken into account.
"Glazed assemblies of fire-resistance according to class REI under the fire conditions as defined in ISO 834 provide, for a given time, stability, integrity and insulation."

To meet the standard on insulation properties to REI level no point of the surface of the panel which is exposed to the exterior of the furnace may undergo an increase in temperature of more than 180°C above its initial (ambient) temperature, and the mean temperature increase of that face must not exceed 140°C. Such panels belonging to class REI may also form barriers against the transmission of infra-red radiation from the seat of a fire.

A crucial factor in the ability of the laminated panel to provide prolonged fire resistance is the temperature of "dilatometric collapse" of the non-vitreous layer material. This is the temperature, also described herein as the "fire-resistance" (FR) temperature, at which the foam created by the application of heat to the material loses its resistance to an applied force. The said temperature can be established by a test in which a crucible containing a small amount of the material (usually some 10 g) is placed in an oven and heated at a certain temperature (often called the "foaming temperature") so as to ensure expansion of the material; the temperature is further increased and pressure is applied to the foamed material to test the integrity of the foam. The "fire-resistance" temperature, marked by the collapse of the foam under the applied pressure, is thus the point at which the material loses its fire-resistant properties. For hydrated silicates, traditionally employed in fire-resistant applications, the said temperature is typically in the range of 400 to 500°C. For more recently developed materials, for example those based on amine salts of acid phosphates, it is significantly higher, typically in the range of about 700°C.

Since any increase in the fire-resistance temperature can extend the barrier period of a laminated glazing panel, often dramatically so, it has become of great interest to achieve further increases in the fire-resistance temperatures.

It is an objective of the present invention to produce a heat-swellable transparent material which under the action of heat produces a foam having a fire-resistance temperature of more than 700°C, preferably more than 800°C. For use in glazing panels it is preferred that the material also satisfy the objectives of being and remaining transparent in normal use of the panel and of providing an adhesive bond between the structural sheets of the panel.

The invention is based on the results of work by the present inventors in producing modified polyphosphates which satisfy the required objectives.

According to the invention there is provided a heat-swellable transparent material as defined in claim 1.

The invention further provides a sheet of transparent vitreous material carrying a layer of the said heat-swellable material, or a fire-resistant panel comprising one or more layers of the said heat-swellable material located between two sheets of transparent vitreous material.

The term "heat-swellable" used herein refers to materials, otherwise known as intumescent materials, with the properties, when exposed to a flame, of swelling and forming an insulating barrier to propagation of the flame.

The materials of the present invention provide a significant increase in fire resistance temperatures. On exposure to severe heating they form a foam which displays a fire-resistance temperature of up to or in excess of 900°C, i.e. some 300°C higher than that of traditional silicate materials and about 200°C higher than materials based on amine salts of acid phosphates. The increase is especially marked in regard to the period of time for which a panel including such a material presents a fire barrier.

The aluminium salt or hydroxide employed as the phosphate modifier seems to have two complementary functions. First it permits the formation, by the application of heat to the material, of a coherent foam as distinct from a powder. Secondly it improves the resistance to optical ageing: without the phosphate modifier there is rapid formation of solid particles which have an adverse optical effect.

Aluminium hydroxide is advantageous as the phosphate modifier in the sense that it does not introduce a further component which may have an adverse effect upon being heated (for example producing a volatile component such as a nitrogen oxide). On the other hand, a composition made with an aluminium salt as modifier seems to have better foaming qualities than a composition made with aluminium hydroxide. The aluminium salt is preferably aluminium nitrate or aluminium chloride.

Aluminium hydroxide is best added to the mixture of water, phosphoric acid and a magnesium reactant during formation of the solution of metal phosphate. An aluminium salt should however preferably be added after formation of the said solution. The solution and added salt should preferably be thoroughly agitated so as to give a uniform quality of product. It is also preferred that the solution be filtered prior to the addition of the aluminium salt.

Although not all fire-resisting applications of a heat-swellable material require the material to be transparent, the main applications are in transparent glazing panels. The materials of the invention are thus transparent. With a phosphorus:metal (e.g. P:Mg) ratio at the lower end of the claimed range of at least 2.0:1 the product materials are generally transparent but may not retain transparency over a prolonged period, tending to be or become white or whitish and thus translucent.

To ensure the preferred levels of initial and retained transparency the phosphorus:metal ratio is preferably at least 2.2:1, giving a product which is well : suited to incorporation in transparent glazing panels.

The use of magnesium phosphate enhances the formation of a material which retains its transparency over a long period.

In one embodiment of the invention the magnesium reactant is a hydrated magnesium carbonate/magnesium hydroxide salt, a preferred example of which has the formula 4MgCO₃.Mg(OH)₂ 4H₂O. These salts have the advantage of readily producing the required phosphate.

The molar ratio of aluminium in the phosphate modifier to metal in the phosphate component is preferably in the range 0.02 to 1:1. If the metal of the phosphate component is magnesium or calcium then the molar ratio of aluminium in the phosphate modifier to metal in the phosphate component is preferably in the range 0.05 to 0.4: 1. These ratios have the advantage of providing good foaming properties in the material while not adversely affecting its transparency.

The material may contain a thickening agent. Adding this agent to the solution increases the viscosity of the solution and forms a gel-like material with high water content, thereby avoiding or reducing the step of drying the solution to form the material.

Preferably the thickening agent is based on one or more of cellulose ether, hydroxyethylcellulose, polyvinyl alcohol, polyurethane, polyacrylate, clay, xanthan gum, and succinoglycane gum.

Preferably the material further contains sulphate (SO₄-), chloride (Cl-) or nitrate (NO₃-) ions and/or ammonium (NH₄⁺), sodium (Na⁺) or potassium (K⁺) ions. These ions allow the solubility of the phosphates to be increased and a gel or "gel-like" material to be obtained without an accompanying solid phase which would be harmful to the optical quality of the material.

The presence of water and its proportion in the material are important for the foaming-qualities of the product. If the material has a high water content, it is difficult to confer the "gel-like" properties required, since the material has a low viscosity and is difficult to retain in place. Preferably the material has a water content of 45% by weight or less, more preferably 40% or less and better still 35% or less. Materials containing a small proportion of water are interesting for their gel-like properties and their optical quality is often more durable upon ageing. It is moreover desirable to have a sufficiently large water content, preferably more than 10% by weight, to ensure the expansion of the material upon heating. The preferred range for the proportion of water is generally 15 to 35% by weight, most preferably 21 to 31% by weight.

The modified solution produced is preferably carefully dried to form a gel-like product.

In the embodiment in which the solution is filtered prior to the addition of the aluminium salt, the filtration removes any residual solids or agglomerates, with a view to improving the optical properties of the material. Filtration may however be unnecessary if care is taken to control the conditions when forming the solution, especially in regard to uniformity of temperature and thorough agitation, such that a clean uniform solution with no agglomerated particles is obtained. An uniform quality of product is highly desirable since a lack of uniformity is likely to lead to a panel with "hot spots" in the gel which would fail before the gel as a whole.

The water employed in the solution should desirably be demineralised water. Water should preferably be at least 45% by weight of the solution of metal phosphate.

In the drying step, evaporation of the water produces a thickening of the solution and an increase in its viscosity. The drying can be achieved in a conventional heated oven, in a microwave oven, under vacuum, by convection or on a hot plate. The preferred drying modes are heated oven drying, microwave oven drying or convection drying. Thorough drying is desirable and can be achieved by a prolonged drying period, (say at least 4 hours), a high drying temperature (for example 100°C), or an intense drying method such as microwave heating (for example 2 minutes at a power of 500W). The preferred drying temperature is in the range 70 to 120°C.

Short drying periods have the advantage of avoiding undue "skin" formation on the product.

The presence of the phosphate modifier appears to have little influence on the preparation and modification of the solution as such but is important in determining the foam-producing qualities of the dried product.

The advantages of the materials of the invention reside in their behaviour upon exposure to intense heat. One of their most advantageous properties is their ability to form a cohesive foam rather than a friable foam.

The invention is further described in the following non-limiting examples.

### Examples 1 to 17

The reactants utilised for Examples 1 to 17 were high purity magnesium hydroxycarbonate in the form 4MgCO₃.Mg(OH)₂.4H₂O, phosphoric acid (85% by weight H₃PO₄), aluminium nitrate nonahydrate [Al(NO₃)₃.9H₂O] and demineralised water.. For Example 1, 50 g of the magnesium carbonate and 110 g water were placed in a reactor cooled by an external water jacket and were thoroughly mixed. 138 g of phosphoric acid were then added progressively with continuous thorough agitation to ensure the breaking up of any agglomerates. The temperature in the reactor was maintained below 50°C by the external water cooling. After the reaction mixture became clear the aluminium nitrate was introduced and again thoroughly mixed in. The quantities of phosphoric acid and aluminium nitrate, and thus the phosphorus:metal ratio and aluminium:metal ratios were varied between the examples. The intermediate product mixture so-formed was sampled to measure the percentage of water present.

The intermediate product mixture was then transferred to a holding vessel and placed in a heated oven at 65, 80 or 100°C. The heating and resulting evaporation of the water content produced a thickening of the mixture, shown by an increase in its viscosity, to form a gel-like product.

The procedure of Example 1 was followed for Examples 2 to 17, with variations in proportions and components as shown in the accompanying Table 1, which also shows details of the products obtained. The materials produced according to the examples had properties as required for the present invention: they were transparent, viscous and adhesive. The second column shows the ratio of phosphorus to metal in the carbonate (magnesium carbonate in Examples 1 to 17, aluminium carbonate in Example 18). The third column shows the ratio of aluminium in the aluminium salt to metal in the carbonate (magnesium in

Examples 1 to 17, aluminium in Example 18). The final column shows their "fire-resistance" (FR) temperature obtained after foaming of the product at respectively 500, 600 or 700°C, according to the examples.

**Table 1**

| Ex. | P/metal (mol) | Al/metal (mol) | H₂O initial (%) | Drying Period (h) | Drying Temp. (°C) | Foaming Temp. (°C) | H₂O dry (%) | FR Temp. (°C) |
|---|---|---|---|---|---|---|---|---|
| 1 | 2.89/Mg | 0.08/Mg | 49.3 | 36 | 80 | 600 | 15.1 | 845 |
| 2 | 2.89/Mg | 0.12/Mg | 49.11 | 36 | 80 | 600 | 29.6 | 740 |
| 3 | 2.21/Mg | 0.05/Mg | 45.15 | 8 | 80 | 600 | 21.7 | 720 |
| 4 | 2.21/Mg | 0.10/Mg | 45.04 | 8 | 80 | 600 | 21.8 | 835 |
| 5 | 2.30/Mg | 0.10/Mg | 47.02 | 4 | 80 | 600 | 31.3 | 910 |
| 6 | 2.30/Mg | 0.10/Mg | 47.02 | 8 | 80 | 600 | 27.1 | 918 |
| 7 | 2.30/Mg | 0.10/Mg | 47.02 | 24 | 80 | 600 | 21.0 | ± 900 |
| 8 | 2.21/Mg | 0.05/Mg | 46.75 | 3.5 | 80 | 600 | 28.8 | 900 |
| 9 | 2.21/Mg | 0.10/Mg | 46.6 | 3.5 | 80 | 600 | 27.7 | 906 |
| 10 | 2.30/Mg | 0.10/Mg | ±45 | 8 | 80 | 500 | 28.0 | 950 |
| 11 | 2.30/Mg | 0.10/Mg | ±45 | 8 | 80 | 700 | 28.0 | 965 |
| 12 | 2.24/Mg | 0.10/Mg | ±45 | ± 1 | 80 | 500 | 40 | 922 |
| 13 | 2.24/Mg | 0.10/Mg | ±45 | ±2 | 80 | 500 | 35 | 921 |
| 14 | 2.24/Mg | 0.10/Mg | ±45 | ±24 | 80 | 500 | 23 | 940 |
| 15 | 2.24/Mg | 0.10/Mg | ±45 | 14.5 | 65 | 500 | 27.26 | >900 |
| 16 | 2.24/Mg | 0.10/Mg | ±45 | 11 | 80 | 500 | 26.6 | >900 |
| 17 | 2.24/Mg | 0.10/Mg | ±45 | 4.5 | 100 | 500 | 24.45 | > 900 |

Samples of the products from Examples 15 to 17 were tested for their ageing properties at ambient temperature (20°C) and at 50°C. For ageing at ambient temperature the property observed was the optical appearance of the sample after 7 days. For ageing at 50°C the property observed was the period of time after which the first "crystal" appeared in the sample. In this context a "crystal" is an optical defect, probably arising from phase separation, which has the appearance of a crystal.

**Table 2**

| Ex. | Water content (%) | Optical appearance after 7 days at 20°C | First "crystal" after thermal ageing at 50°C: |
|---|---|---|---|
| 15 | 27.26 | skin | 2 days |
| 16 | 26.6 | microbubbles | 19 days |
| 17 | 24.45 | microbubbles | >22 days |

### Comparative Examples C1 to C4

Comparative examples were conducted in a generally similar manner to Example 1 but with one or more of the parameters outside the limits required for the invention. Details of the comparative examples are shown in the accompanying Table 3. The products obtained did not meet the material properties required for the invention. Comparative examples C1 and C2 gave a product with an unacceptably high crystalline content which leads to lack of uniformity in the gel layer of a glazing panel and a tendency to form uneven hot spots on exposure to fire. Comparative examples C3 and C4 produced a material with insufficient viscosity to remain evenly distributed across the panel surface. In all the comparative examples the foam obtained was of too powdery consistency for the fire resistance temperature (FR) to be measurable.

**Table 3**

| Ex. | P/Mg (mol) | Al/Mg (mol) | H₂O initial (%) | Drying Period (h) | Drying Temp. (°C) | H₂O dry (%) | FR Temp. (°C) |
|---|---|---|---|---|---|---|---|
| C1 | 2.89 | 0 | 49.7 | 36 | 80 | 10.3 | NMa |
| C2 | 2.21 | 0 | 45.23 | 8 | 80 | 21.7 | NMa |
| C3 | 2.21 | 0 | 46.9 | 0 | 80 | 46.9 | NMa |
| C4 | 2.30 | 0 | 47.34 | 0 | 80 | 47.02 | NMa |
| NMa = not measurable | | | | | | | |

### Examples 19 to 24

The reactants for Examples 19 to 24 were high purity magnesium hydroxycarbonate powder in the form 4MgCO₃.Mg(OH)₂.4H₂O, phosphoric acid (85% by weight H₃PO₄), aluminium nitrate nonahydrate [Al(NO₃)₃.9H₂O] and demineralised water. Water and phosphoric acid were placed in a reactor cooled by an external water jacket and were thoroughly mixed. Carbonate powder was then added progressively with continuous thorough agitation to ensure the breaking up of any agglomerates. The temperature in the reactor was maintained at approximately 70°C by externally circulated water at this temperature. The resulting solution was filtered. When the reaction mixture was clear the aluminium nitrate was introduced and again thoroughly mixed in. The solution was then dehydrated on a heated plate with strong agitation to a water content of 45% by weight

Some 20 g of the intermediate product mixture so formed was then transferred to a holding vessel and placed in a microwave oven for different periods at a power setting of 500 W. The resulting heating and evaporation of the water content produced a thickening of the mixture, shown by an increase in its viscosity, to form a gel-like product. All the compositions obtained had a P/Mg ratio of 2.24 and an Al/Mg ratio of 0.10. Their water content after the microwave drying for the given period (in minutes" and seconds") is shown in the accompanying Table 4, together with their fire resistance temperatures after foaming at 500°C, and ageing properties as described above for the samples of Examples 15 to 17.

**Table 4**

| Ex. | Water content % | Drying period (min) | FR temp (°C) | Optical appearance after 7 days at 20°C | First "crystal" after thermal ageing at 50°C: |
|---|---|---|---|---|---|
| 19 | 17.96 | ±1'45" | >900 | NMd | NMd |
| 20 | 20.44 | 2' 10" | >900 | some microbubbles | >24 days |
| 21 | 22.15 | 2'00" | >900 | some microbubbles | 20 days |
| 22 | 24.84 | 1'55" | >900 | "crystals" | 5 days |
| 23 | 27.56 | 1'45" | >900 | "crystals" | 6 days |
| 24 | 30.07 | 1'30" | >900 | "crystals" | 1 day |
| NMd = not measured | | | | | |

### Examples 25 to 29

The reactants and manufacturing conditions were the same as for examples 19 to 24, again producing a dehydrated solution containing about 45% water by weight. The intermediate product mixture was then poured in a quantity of 0.1 g/cm² on a 200 x 200 mm glass sheet and placed in a heated oven at 50°C for 29 to 33 hours to obtain a gel-like product with a water content of 20% by weight. A second glass sheet was placed over the gel-like product and the whole assembly was placed in a heated oven at 50°C for 12 hours to form a transparent laminated panel: The final thickness of the composition was 200 and 700 µm. Table 5 below shows the P/Mg ratio, Al/Mg ratio, water content, pH of the starting solution (55-75% water content), thickness of the dried gel-like composition, FR temperature and density of crystals after ageing for 30 days at 50°C. The density of crystals was measured by the number of crystals in a 1 dm square (100 x 100 mm).

**Table 5**

| Ex. | P/Mg (mol) | Al/Mg (mol) | water content (%) | pH | thickness (µm) | FR temp (°C) | density of "crystals" (30 days at 50°C). |
|---|---|---|---|---|---|---|---|
| 25 | 2.24 | 0.3 | 20 | 0.72 | 210-580 | >800 | 18/dm² |
| 26 | 2.24 | 0.2 | 20 | 0.96 | 260-510 | >800 | 20/dm² |
| 27 | 2.24 | 0.1 | 20 | 1.23 | 330-450 | >800 | 326/dm² |
| 28 | 2.3 | 0.1 | 20 | 1.16 | 276-580 | >800 | 208/dm² |
| 29 | 2.4 | 0.1 | 19 | 1.06 | 260-600 | >800 | 126/dm² |

In a variant of example 27, the composition was dried in a heated oven at 80°C during 6 hours instead of 33 hours at 50°C. The final water content was also 20%. The results were the same except the density of crystals was only 43 / dm² instead of 326/dm².

### Examples 30 to 32

The same procedure was used as in examples 25 to 29 with the following exceptions: the reactant aluminium nitrate was replaced by aluminium chloride (example 31) or by aluminium hydroxide (example 32). Aluminium hydroxide being insoluble in the magnesium phosphate solution, it was introduced at the same time as magnesium hydroxycarbonate, before adding water and phosphoric acid. The whole was heated to 80°C and agitated to obtain a transparent liquid composition. Furthermore, with this reactant the P/Mg molar ratio had to be higher (2.86) to obtain a transparent solution.

The compositions were dried in a heated oven at 50°C to obtain a water content of 19±2% by weight. A transparent laminated panel was formed with the dried composition, as in examples 25 to 29.

The accompanying Table 6 shows the P/Mg ratio, Al/Mg ratio and pH of the starting composition (56±-2% water content), and the FR temperature and density of the crystals after ageing for 50 days at 50°C and 35 days at 20°C.

**Table 6**

| Ex. | P/Mg (mol) | Al/Mg (mol) | pH | FR temp (°C) | density of "crystals" (35 days at 20°C) | density of "crystals" (50 days at 50°C) |
|---|---|---|---|---|---|---|
| 30 (nitrate) | 2.24 | 0.2 | 0.9-1 | >800 | 0 | 20/dm² |
| 31 (chloride) | 2.24 | 0.2 | 0.8-0.9 | >800 | 12/dm² | not measured |
| 32 (hydroxide) | 2.86 | 0.2 | 1.6-1.7 | >800 friable | 150-250/dm² | not measured |

### Example 33

In this example a thickening agent was added to the composition. The thickening agent was a hydroxyethylcellulose (TYLOSE H100000YP2 made by Hoechst AG]. The starting composition contained aluminium nitrate and molar ratios P/Mg=2.24 and Al/Mg=0.1. The composition was dehydrated to obtain a water content of 35% by weight in the first case and 45% by weight in the other case. Then thickening agent was added in a quantity of approximately 3% by weight. The whole was placed under agitation and heating between 50 and 70°C for 15-30 minutes. A gel-like product composition was obtained. Foaming of the gel-like product occurred at 600°C to obtain a foam. The FR temperature was not measured because the foam was friable. No significant difference was found between the two different water content compositions except that the high (45%) water content composition became liquid at 80°C.

## Claims

1. A heat-swellable transparent material having a fire-resistance of more than 700°C, comprising a phosphate component, **characterised in that** the phosphate component is a phosphate of magnesium, the molar ratio of phosphorus to metal being at least 2.0:1, and the phosphate is modified by an aluminium salt or aluminium hydroxide.

2. A material as claimed in any preceding claim, in which the phosphate component is obtainable from a hydrated magnesium carbonate/magnesium hydroxide salt.

3. A material as claimed in any preceding claim, in which the phosphate modifier is aluminium nitrate or aluminium chloride.

4. A material as claimed in any preceding claim, in which the molar ratio of aluminium in the phosphate modifier to metal in the phosphate component is in the range 0.02 to 1:1.

5. A material as claimed in any preceding claim, in which the molar ratio of aluminium in the phosphate modifier to metal in the phosphate component is in the range 0.05 to 0.4:1.

6. A material as claimed in any preceding claim, in which the water content is 45% by weight or less.

7. A material as claimed in claim 6, in which the water content is 40% by weight or less.

8. A material as claimed in claim 7, in which the water content is 35% by weight or less.

9. A material as claimed in any preceding claim, in which the water content is in the range 15 to 35% by weight.

10. A material as claimed in claim 9, in which the water content is in the range 21 to 31% by weight.

11. A material as claimed in any preceding claim, which also contains a thickening agent.

12. A material as claimed in claim 11, in which the thickening agent is based on one or more of a cellulose ether, hydroxyethylcellulose, polyvinyl alcohol, polyurethane, polyacrylate, clay, xanthan gum and succinoglycane gum.

13. A material as claimed in any preceding claim, which further contains sulphate (SO₄-) chloride (Cl-) or nitrate (NO₃-) ions.

14. A material as claimed in any preceding claim, which further contains ammonium (NH₄⁺), sodium (Na⁺) or potassium (K⁺) ions.

15. A sheet of transparent vitreous material carrying a layer of heat-swellable material as claimed in any preceding claim.

16. A fire-resistant panel comprising one or more layers of heat-swellable material as claimed in any of claims 1 to 14, being located between two sheets of transparent vitreous material.

## Patentansprüche

1. Wärmequellbares transparentes Material mit einer Feuerbeständigkeit von mehr als 700°C, umfassend eine Phosphatkomponente, **dadurch gekennzeichnet, daß** die Phosphatkomponente ein Phosphat von Magnesium ist, wobei das molare Verhältnis von Phosphor zu Metall mindestens 2,0:1 beträgt und das Phosphat durch ein Aluminiumsalz oder Aluminiumhydroxid modifiziert ist.

2. Material nach einem vorhergehenden Anspruch, wobei die Phosphatkomponente aus einem hydratisierten Magnesiumcarbonat/Magnesiumhydroxid-Salz erhältlich ist.

3. Material nach einem vorhergehenden Anspruch, wobei das Phosphatmodifiziermittel Aluminiumnitrat oder Aluminiumchlorid ist.

4. Material nach einem vorhergehenden Anspruch, wobei das molare Verhältnis von Aluminium in dem Phosphatmodifiziermittel zu Metall in der Phosphatkomponente in dem Bereich von 0,02 bis 1:1 liegt.

5. Material nach einem vorhergehenden Anspruch, wobei das molare Verhältnis von Aluminium in dem Phosphatmodifiziermittel zu Metall in der Phosphatkomponente in dem Bereich von 0,05 bis 0,4:1 liegt.

6. Material nach einem vorhergehenden Anspruch, wobei der Wassergehalt 45 Gew.-% oder weniger beträgt.

7. Material nach Anspruch 6, wobei der Wassergehalt 40 Gew.-% oder weniger beträgt.

8. Material nach Anspruch 7, wobei der Wassergehalt 35 Gew.-% oder weniger beträgt.

9. Material nach einem vorhergehenden Anspruch, wobei der Wassergehalt in dem Bereich von 15 bis 35 Gew.-% liegt.

10. Material nach Anspruch 9, wobei der Wassergehalt in dem Bereich von 21 bis 31 Gew.-% liegt.

11. Material nach einem vorhergehenden Anspruch, welches auch ein Verdikkungsmittel enthält.

12. Material nach Anspruch 11, wobei das Verdickungsmittel auf einem oder mehreren von einem Celluloseether, Hydroxyethylcellulose, Polyvinylalkohol, Polyurethan, Polyacrylat, Ton, Xanthangummi und Succinoglycangummi basiert.

13. Material nach einem vorhergehenden Anspruch, welches ferner Sulfat(SO₄-), Chlorid (Cl-) oder Nitrat (NO₃-)-Ionen enthält.

14. Material nach einem vorhergehenden Anspruch, welches weiter Ammonium (NH₄⁺), Natrium (Na⁺) oder Kalium (K⁺)-Ionen enthält.

15. Scheibe von transparentem glasartigen Material, das eine Schicht von wärmequellbarem Material, wie in einem vorhergehenden Anspruch beansprucht, trägt.

16. Feuerbeständige Platte, umfassend eine oder mehrere Schichten von wärmequellbarem Material, wie in einem der Ansprüche 1 bis 14 beansprucht, die zwischen zwei Scheiben von transparentem glasartigen Material angeordnet ist bzw. sind.

## Revendications

1. Une matière transparente susceptible de gonfler à la chaleur ayant une résistance au feu de plus de 700°C, comprenant un composant phosphate,
**caractérisée en ce que** le composant phosphate est un phosphate de magnésium, le rapport molaire du phosphore au métal étant d'au moins 2,0:1, et le phosphate est modifié par un sel d'aluminium ou un hydroxyde d'aluminium.

2. Une matière telle que revendiquée dans la revendication précédente, dans laquelle le composant phosphate peut être obtenu à partir d'un carbonate de magnésium hydraté/sél d'hydroxyde de magnésium.

3. Une matière telle que revendiquée dans l'une quelconque des revendications précédentes, dans laquelle le modificateur du phosphate est du nitrate d'aluminium ou du chlorure d'aluminium.

4. Une matière telle que revendiquée dans l'une quelconque des revendications précédentes, dans laquelle le rapport molaire de l'aluminium dans le modificateur du phosphate au métal dans le composant phosphate est dans la gamme 0,02 à 1:1.

5. Une matière telle que revendiquée dans l'une quelconque des revendications précédentes, dans laquelle le rapport molaire de l'aluminium dans le modificateur phosphate au métal dans le composant phosphate est dans la gamme 0,05 à 0,4:1.

6. Une matière telle que revendiquée dans l'une quelconque des revendications précédentes, dans laquelle la teneur en eau est de 45% en poids ou moins.

7. Une matière telle que revendiquée dans la revendication 6, dans laquelle la teneur en eau est de 40% en poids ou moins.

8. Une matière telle que revendiquée dans la revendication 7, dans laquelle la teneur en eau est de 35% en poids ou moins.

9. Une matière telle que revendiquée dans l'une quelconque des revendications précédentes, dans laquelle la teneur en eau est dans la gamme de 15 à 35% en poids.

10. Une matière telle que revendiquée dans la revendication 9, dans laquelle la teneur en eau est dans la gamme de 21 à 31% en poids.

11. Une matière telle que revendiquée dans l'une quelconque des revendications précédentes, qui contient également un agent épaississant.

12. Une matière telle que revendiquée dans la revendication 11, dans laquelle, l'agent épaississant à base d'un ou plusieurs, éther de cellulose, hydroxyéthylcellulose, alcool de polyvinylique, polyuréthane, polyacrylate, argile, gomme de xanthane et gomme de succinoglycane.

13. Une matière telle que revendiquée dans l'une quelconque des revendications précédentes, qui contient en outre des ions de sulfate (SO₄-), de chlorure (Cl-) ou de nitrate (NO₃-).

14. Une matière telle que revendiquée dans l'une quelconque des revendications précédentes, qui contient en outre des ions d'ammonium (NH₄+), sodium (Na+) ou potassium (K+).

15. Une feuille de matériau verrier transparent portant une couche de matière susceptible de gonfler à la chaleur telle que revendiquée dans l'une quelconque des revendications précédentes.

16. Un panneau résistant au feu comprenant une ou plusieurs couches de matière susceptible de gonfler à la chaleur telle que revendiquée dans l'une quelconque des revendications de 1 à 14, situé entre deux feuilles de matériau verrier transparent.
